# EUROPÄISCHE PATENTANMELDUNG

(11) **EP 3 348 319 A1**
(43) Veröffentlichungstag der Anmeldung: **18.07.2018**
(21) Anmeldenummer: 17151343.5
(22) Anmeldetag: 13.01.2017
(51) Int. Cl.: B01D 1/00, B01D 1/16, B01D 3/34, B01D 5/00, C02F 1/04, C02F 1/12, C02F 1/16

(54) **VERFAHREN UND VORRICHTUNG ZUM KÜHLEN EINES FLUIDSTROMS EINER ELEKTROLYSEEINHEIT UND ZUR WASSERGEWINNUNG**

(71) Anmelder: Siemens Aktiengesellschaft, 80333 München (DE)
(72) Erfinder: Hanebuth, Marc, 90482 Nürnberg (DE); Reiner, Andreas, 91083 Baiersdorf (DE); Siegert, Knut, 91080 Uttenreuth (DE); Ziegmann, Markus, 91083 Baiersdorf (DE)

(57) **Zusammenfassung**

Die Erfindung betrifft eine Vorrichtung und ein Verfahren zum Kühlen eines Fluidstroms einer Elektrolyseeinheit und zur Wassergewinnung aus Umgebungsluft mit mehreren Schritten. Es wird ein feuchter Luftstrom mit einer ersten Molmenge Wasser in eine Verdunstereinheit geführt. Anschließend wird Rohwasser in die Verdunstereinheit im Gegenstrom zur feuchten Luft geführt, wobei in der Verdunstereinheit eine Temperatur von maximal der Siedetemperatur des Wassers herrscht. In der Verdunstereinheit wird reines Wasser aus dem Rohwasser in den feuchten Luftstrom verdunstet, wobei sich das Rohwasser abkühlt. Das abgekühlte Rohwasser wird in einen Wärmetauscher geführt und der Fluidstrom der Elektrolyseeinheit wird in den in den Wärmetauscher geführt, wobei Wärme von dem Fluidstrom auf das Rohwasser übertragen wird. Das vorgewärmte Rohwasser wird in die Verdunstereinheit zurückgeführt. Die feuchte Luft mit dem reinen Wasser wird in eine Wassergewinnungseinheit geführt und eine zweite Molmenge des reinen Wassers wird aus der feuchten Luft mit Wasser (FLW) in der Wassergewinnungseinheit (3) abgetrennt, wobei eine dritte in der Luft verbleibende Wassermolmenge kleiner als die erste Molmenge ist. Der abgekühlte Fluidstrom wird zur Elektrolyseeinheit zurückgeführt.

## Beschreibung

Die Erfindung betrifft ein Verfahren und eine Vorrichtung zum Kühlen eines Fluidstroms einer Elektrolyseeinheit und die Wassergewinnung.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, können regelbare Kraftwerke oder Speicher, die diese Energie speichern, eingesetzt werden.

Um die erneuerbare Energie speichern zu können, ist insbesondere die Elektrolyse eine attraktive Möglichkeit. Hierbei wird bei einem Überangebot an Strom Wasser in die Komponenten Wasserstoff und Sauerstoff zerlegt. Wasserstoff und Sauerstoff können anschließend gespeichert werden. Benötigt man wieder Energie, so kann man insbesondere mittels einer Brennstoffzelle, wiederum aus Wasserstoff und Sauerstoff Strom erzeugen.

Als Voraussetzung für eine Durchführung einer Elektrolyse bedarf es einerseits der Verfügbarkeit von reinem Wasser. Eine Möglichkeit in Küstennähe Trink- und Brauchwasser zu erzeugen, liegt in der Entsalzung von Meerwasser. Meist wird das Trink- und Brauchwasser aus dem Meerwasser mittels Umkehrosmose erzeugt. Allerdings erzeugt diese Technologie große Mengen salzreichen Konzentrats als Abfall. Das Entsorgen dieses salzreichen Konzentrats erfolgt häufig durch Einleiten ins Meer, wo es große Umweltschäden verursacht.

Eine mögliche Alternative zur Wassergewinnung, insbesondere zur Trinkwassergewinnung, liegt in der Gewinnung von Wasser aus der Luft.

Bei der Gewinnung von Wasser aus Luft ist insbesondere die Kühlung einer Oberfläche bis unterhalb des Taupunkts der Luft mit einer elektrisch betriebenen Kältemaschine bekannt. Unterhalb des Taupunkts kondensiert das Wasser aus der Luft und kann so gewonnen werden. Nachteilig weist diese Technik einen hohen Energieverbrauch auf. Auch mit einer Kälterückgewinnungsvorrichtung oder einer Vorkühlung des eintretenden Luftstroms ist der Energieverbrauch dieser Wassergewinnungsmethode nachteilig hoch.

Weiterhin wird ein günstiges und technisch robustes Kühlsystem für das Durchführen der Wasser-Elektrolyse benötigt, um die bei der Elektrolyse stets anfallende Abwärme abzuführen. Insbesondere in tropischen und subtropischen Regionen ist es schwierig, die Elektrolyse-Abwärme abzuführen. Typischerweise fällt eine Abwärme im Bereich zwischen 60 °C bis 100 °C an. Bei Temperaturen der Umgebung von bis zu 50 °C, ist eine reine Kühlung mittels Umgebungsluft nachteilig nur schwer möglich. Die Temperaturdifferenz zwischen Wärmequelle und Umgebungsluft ist dann so gering, dass große Wärmetauscher mit relativ hohen Investitionskosten nachteilig benötigt werden. Weiterhin werden nachteilig große Volumenströme an Kühlmedium benötigt, was einen relativ hohen Energieverbrauch, insbesondere bei Nebenverbrauchern wie Pumpen und Gebläse hervorruft.

Aufgabe der vorliegenden Erfindung ist es daher, ein Verfahren und eine Vorrichtung anzugeben, welche die Gewinnung von Wasser für die Elektrolyse aus Luft und ein Kühlen einer Elektrolyseeinheit energieeffizient ermöglicht.

Die Aufgabe wird erfindungsgemäß mit den Merkmalen des Anspruchs 1 und den Merkmalen des Anspruchs 10 gelöst.

Das erfindungsgemäße Verfahren zum Kühlen eines Fluidstroms einer Elektrolyseeinheit umfasst mehrere Schritte. Zunächst wird feuchte Luft umfassend eine erste Molmenge Wasser in eine Verdunstereinheit geführt. Anschließend wird Rohwasser in die Verdunstereinheit im Gegenstrom zur feuchten Luft geführt, wobei in der Verdunstereinheit eine Temperatur von maximal der Siedetemperatur des Wassers herrscht. Anschließend verdunstet reines Wasser aus dem Rohwasser in die feuchte Luft, wobei sich das Rohwasser abkühlt. Das abgekühlte Rohwasser wird in einen Wärmetauscher geführt. Auch der Fluidstrom der Elektrolyse wird in den Wärmetauscher geführt. In dem Wärmetauscher geht Wärme des Fluidstroms auf das Rohwasser über. Die feuchte Luft mit dem reinen Wasser wird in die Wassergewinnungseinheit geführt. In der Wassergewinnungseinheit wird eine zweite Molmenge reinen Wassers aus der feuchten Luft abgetrennt, wobei eine dritte nach der Abtrennung des Wassers in der Luft verbleibende Molmenge an Wasser kleiner als die erste Molmenge Wasser ist. Das vorgewärmte Rohwasser wird zurück in die Verdunstereinheit geführt. Der abgekühlte Fluidstrom wird zurück in die Elektrolyseeinheit geführt.

Die Vorrichtung zum Durchführen des erfindungsgemäßen Verfahrens zum Kühlen eines Fluidstroms einer Elektrolyseeinheit und zur Wassergewinnung aus Umgebungsluft umfasst eine Verdunstereinheit geeignet zum Verdunsten von reinem Wasser aus Rohwasser in feuchte Luft und einen Elektrolyseur, wobei ein Fluidstrom des Elektrolyseurs mittels des Rohwassers kühlbar ist.

Aus der mit Wasser angereicherten Luft, welche die Verdunstereinheit verlässt, wird Wasser gewonnen. Die Menge an gewonnenem Wasser übersteigt vorteilhaft die Menge an in der Verdunstereinheit verdunstetem Wasser. Somit wird insgesamt Wasser aus der Luft gewonnen, welches vorteilhaft in der Elektrolyse als Edukt eingesetzt werden kann.

Besonders vorteilhaft wird der Fluidstrom der Elektrolyse mittels eines Rohwasserstroms in einem Wärmetauscher gekühlt. Der Wärmeübergang zwischen zwei Flüssigkeiten ist vorteilhaft besonders gut. Die benötigten Temperaturunterschiede können daher klein sein im Vergleich zu einer Luft-Wasserkühlung.

Vorteilhaft wird der Rohwasserstrom vorgewärmt, bevor er in den Verdunster gelangt. Dadurch wird der Verdunstungsprozess verbessert, sodass die Effizienz des gesamten Verfahrens vorteilhaft ansteigt.

In einer vorteilhaften Ausgestaltung und Weiterbildung der Erfindung wird das Rohwasser im Wesentlichen aus der feuchten Luft gewonnen. Vorteilhafterweise benötigt die Vorrichtung und das Verfahren dann keine weiteren Wasserquellen.

Besonders vorteilhaft wird Wasser abgetrennt, welches so rein ist, dass es auch als Edukt-Strom für die Elektrolyse dienen kann. Dies erhöht die Effizienz des Elektrolyseverfahrens und macht die Standortwahl für den Betrieb der Elektrolyse deutlich flexibler, da vor Ort keine Wasserquelle vorhanden sein muss.

In einer weiteren vorteilhaften Ausgestaltung und Weiterbildung der Erfindung liegt die Temperatur in der Verdunstereinheit in einem Bereich von wenigstens 40 °C bis maximal 55 °C. Vorteilhaft ist diese Temperatur ausreichend hoch, damit die feuchte Luft eine ausreichend große Menge an Wasser aus dem Rohwasser aufnehmen kann. Vorteilhaft ist es weiterhin möglich, dass diese Temperaturen lediglich durch das Vorwärmen des Rohwassers mittels der Abwärme des Elektrolyseurs in dem ersten Wärmetauscher erreicht werden.

In einer weiteren vorteilhaften Ausgestaltung und Weiterbildung der Erfindung wird als Wassergewinnungseinheit ein Kondensator, eine Absorptionseinheit oder eine Adsorptionseinheit verwendet. Unter Kondensator ist hier eine verfahrenstechnische Vorrichtung zum Kondensieren einer Flüssigkeit aus einem Gas zu verstehen. Die Worte Kondensator und Kondenser sind im Rahmen dieser Anmeldung als Äquivalente zu verstehen.

In einer weiteren vorteilhaften Ausgestaltung und Weiterbildung der Erfindung werden als Adsorptionsmittel Kieselgel, ein Molsieb oder ein Zeolith verwendet.

In einer weiteren vorteilhaften Ausgestaltung und Weiterbildung der Erfindung wird der Kondensator mittels eines Wärmemediums betrieben, welches mittels Umgebungsluft gekühlt werden kann. Insbesondere erfolgt die Kühlung in der Nacht, wenn die Umgebungstemperaturen so niedrig sind, dass ein effizientes Kühlen des Wärmemediums möglich ist.

In einer weiteren vorteilhaften Ausgestaltung und Weiterbildung der Erfindung wird die Verdunstereinheit bei einem niedrigeren Druck als die Wassergewinnungseinheit betrieben. Insbesondere führt ein Erniedrigen des Druckes in der Verdunstereinheit dazu, dass noch mehr Wasser in die feuchte Luft übergehen kann. Somit wird der Anteil des Wassers, der in der Verdunstereinheit gewonnen werden kann, erhöht. Werden Verdunstereinheit und Kondensator über ein Gebläse miteinander verbunden, so sorgt dies dafür, dass in der Verdunstereinheit der Druck erniedrigt und gleichzeitig in der Wassergewinnungseinheit der Druck erhöht wird. Diese Druckerhöhung führt vorteilhafterweise dazu, dass ein größerer Anteil an Wasser aus der feuchten Luft kondensieren kann als bei Umgebungsdruck. Diese Druckverhältnisse ermöglichen besonders vorteilhaft eine effiziente Wassergewinnung.

Zweckmäßigerweise umfasst die Vorrichtung zum Kühlen der Elektrolyse einen Wärmetauscher, welcher geeignet ist zum Erwärmen des Rohwassers mittels der Abwärme eines Fluidstroms des Elektrolyseurs vor dem Führen in die Verdunstereinheit. Vorteilhaft wird dadurch zum einen das Abkühlen des Fluidstroms der Elektrolyse ermöglicht, und andererseits die Effizienz der Verdunstereinheit erhöht.

Besonders vorteilhaft ist der Wärmetauscher ein Flüssig-Flüssig-Wärmetauscher. Bei Flüssig-Flüssig-Wärmetauschern ist die benötigte Temperaturdifferenz zwischen den beiden wärmeübertragenden Medien deutlich kleiner als bei Gas-Flüssig-Wärmetauschern.

Besonders vorteilhaft umfasst die Verdunstereinheit eine Packung oder eine Füllkörperfüllung. Dies vergrößert die Oberfläche zwischen der feuchten Luft und dem Rohwasser, sodass ein möglichst großer Anteil, bzw. eine möglichst große Molmenge, an Wasser in die feuchte Luft übergehen kann.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Vorrichtung zur Elektrolyse- Kühlung und Wassergewinnung mit einer Verdunstereinheit und einer Wassergewinnungseinheit;
- Figur 2: eine Vorrichtung zur Elektrolyse- Kühlung und Wassergewinnung mit einer Verdunstereinheit und einer Kühlbox;
- Figur 3: eine Vorrichtung zur Elektrolyse- Kühlung und Wassergewinnung mit einer Verdunstereinheit und einer Adsorptionseinheit;
- Figur 4: eine schematische Übersicht über das Verfahren zur Elektrolysekühlung und Wassergewinnung.

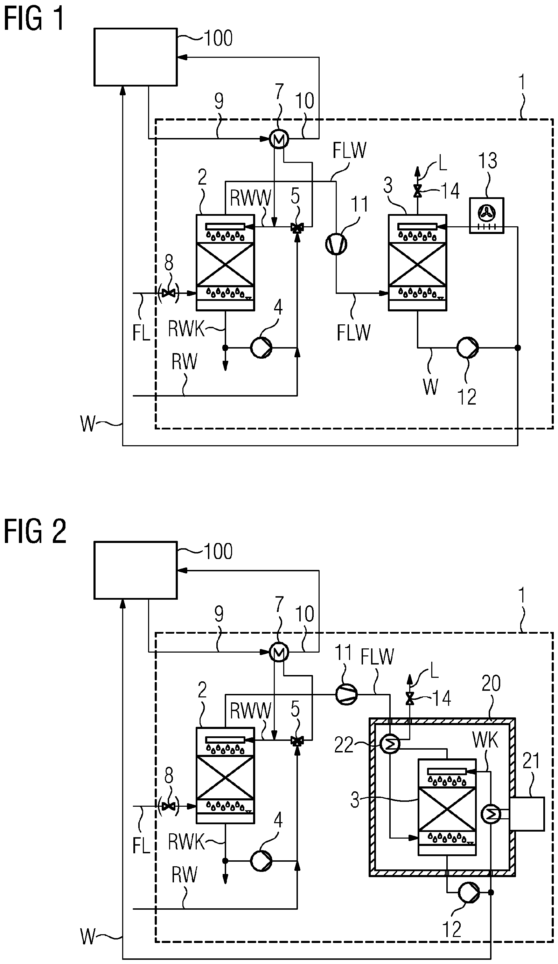

In einem ersten Ausführungsbeispiel, dargestellt in Figur 1, umfasst die Elektrolyse-Kühlvorrichtung und Wassergewinnungsanlage 1 eine Verdunstereinheit 2 und eine Wassergewinnungseinheit 3. In die Verdunstereinheit 2 wird feuchte Luft FL geführt. Optional ist eine erste Drossel 8 vorhanden, mittels welcher der sich einstellende Druck in der Verdunstereinheit 2 geregelt werden kann. Typischerweise wird die feuchte Luft FL am Fuße der Verdunstereinheit 2, in anderen Worten am unteren Ende der Verdunstereinheit 2, zugeführt. Die feuchte Luft FL stellt typischerweise Umgebungsluft dar.

Weiterhin wird in die Verdunstereinheit 2 warmes Rohwasser RWW zugeführt. Typischerweise wird dieses warme Rohwasser RWW am Kopf der Verdunstereinheit 2, in anderen Worten am oberen Ende der Verdunstereinheit 2, zugeführt. Das warme Rohwasser RWW wird in der Verdunstereinheit 2 im Gegenstrom zum feuchten Luftstrom FL geführt und in der Verdunstereinheit 2 verrieselt.

Insbesondere umfasst die Verdunstereinheit 2 Einbauten, welche dazu führen, dass sich eine große Austauschoberfläche zwischen der flüssigen und der gasförmigen Phase ausbildet. Diese Einbauten können typischerweise Packungen oder Füllkörper umfassen. In der Verdunstereinheit 2 verdunstet ein Teil des Wassers aus dem Rohwasser RWW, welcher daraufhin mit dem feuchten Luftstrom mit Wasser FLW aus der Verdunstereinheit 2 hinaus geführt wird. Ein Teil des Wassers verbleibt in der flüssigen Phase des warmen Rohwassers RWW und wird als nun abgekühltes Rohwasser RWK aus der Verdunstereinheit 2 geführt.

Das kalte Rohwasser RWK kann nun entweder aus dem Prozess herausgeführt werden oder über eine erste Umwälzpumpe 4 zurück zur Verdunstereinheit 2 geführt werden.

Ein Teil des kalten Rohwassers RWK wird nicht zurück in die Verdunstereinheit 2 geführt, sondern verlässt die Wassergewinnungsanlage 1, um ein Aufkonzentrieren von Verunreinigungen, insbesondere von Salzen zu verhindern.

Ein Anteil des kalten Rohwassers RWK, welcher zur Verdunstereinheit 2 zurückgeführt werden soll, wird über das erste Drei-Wege-Ventil 5 zu einem ersten Wärmetauscher 7 geführt. Dieser erste Wärmetauscher 7 wird einerseits von dem kalten Rohwasser RWK und andererseits von dem warmen Fluidstrom 9 der Elektrolyse, den es zu kühlen gilt, durchströmt. Insbesondere umfasst der Fluidstrom 9 Wasser aus einem Wasser-Elektrolyseur. Die Temperatur des Fluidstroms 9 liegt typischerweise in einem Bereich zwischen 60 °C und 100 °C, insbesondere zwischen 60°C und 80°C. Es ist aber alternativ ebenso denkbar, dass insbesondere ein Fluidstrom eines Kohlenstoffdioxid-Elektrolyseurs in den Wärmetauscher 7 geführt wird.

Der abgekühlte Fluidstrom 10 verlässt den Wärmetauscher 7. Der Fluidstrom aus der Elektrolyse umfasst typischerweise Wasser, insbesondere aus dem Elektrolyt des Elektrolyseurs. Dieses Wasser kann in Abhängigkeit der Art des Elektrolyseurs weitere Komponenten umfassen. Bei einem PEM-Elektrolyseur, also einen Wasser-Elektrolyseur, wird nahezu reines Wasser verwendet. Bei einem alkalischen Elektrolyseur umfasst der Fluidstrom eine wässrige KOH-Lösung. Bei einer Chlor-Alkali-Elektrolyse umfasst der Fluidstrom eine wässrige NaOH-, und/oder wässrige NaCl Lösung. Bei einem Kohlenstoffdioxid-Elektrolyseur umfasst der Fluidstrom eine wässrige Lösung mit einem Leitsalz.

Das erste Drei-Wege-Ventil 5 ermöglicht ein Einstellen der Kühlleistung bzw. der Heizleistung des ersten Wärmetauschers 7.

Da kontinuierlich Wasser aus dem Rohwasser RW entzogen wird, muss Rohwasser RW dem Prozess kontinuierlich oder wenigstens semi-kontinuierlich zugeführt werden, um ein Austrocknen der Verdunstereinheit 2 zu verhindern.

Das Abkühlen des Fluidstroms 9 der Elektrolyse und somit auch Vorwärmen des Rohwassers RWK in dem ersten Wärmetauscher 7 vor dem Zuführen zu der Verdunstereinheit 2 ist insbesondere in warmen, also in subtropischen und tropischen, Klimaregionen sinnvoll. In diesen warmen Klima - Regionen ist es nachteilig sehr energieintensiv und somit auch teuer zu kühlen. Bei einer Umgebungslufttemperatur von insbesondere wenigstens 30°C kommt es dort außerdem vor, dass die Umgebungsluft, welche als feuchte Luft FL zur Verdunstereinheit 2 hinzugeführt wird, vollständig mit Wasser gesättigt ist. Um dennoch Wasser aus dem Rohwasser in die bei Umgebungstemperatur gesättigte feuchte Luft verdunsten zu können, und somit die Temperatur des Rohwassers in der Verdunstereinheit 2 so weit absenken zu können, dass die Kühlleistung des erkalteten Rohwassers RWK für den Fluidstrom 9 der Elektrolyse ausreichend ist, muss die Temperatur in der Verdunstereinheit 2 oberhalb der Temperatur der feuchten Luft FL, insbesondere der Umgebungsluft, liegen. Die Verdunstereinheit 2 wird daher mittels des vorgewärmten Rohwassers RWW auf Temperaturen insbesondere oberhalb von Temperaturen der feuchten Luft FL, bevorzugt wenigstens auf 30°C, besonders bevorzugt in einem Bereich zwischen 40 °C bis 55 °C, aufgeheizt. Um eine ausreichende Menge an Wasser aus dem warmen Rohwasser RWW in die feuchte Luft zu verdunsten und somit die Temperatur des Rohwassers ausreichend für eine Kühlung zu erniedrigen, sollte eine ausreichende Temperaturdifferenz von wenigstens 5 K, besonders bevorzugt von wenigstens 10 K vorliegen, wobei die feuchte Luft die niedrigere Temperatur aufweist.

Als Beispiel für eine mögliche Kühlleistung des kalten Rohwassers RWK können folgende Daten herangezogen werden. Bei einer Umgebungstemperatur von etwa 30° C liegt der maximale Stoffmengenanteil an Wasser in der Umgebungsluft bei etwa 4 mol%. Selbst für den Fall, dass die Umgebungsluft einen Stoffmengenanteil von Wasser von 4 mol% aufweist, also nahe an der Sättigung der Umgebungsluft mit Wasser liegt, können die Volumenströme der feuchten Luft mittels des Gebläses 11 derart erhöht werden, dass eine Kühlleistung immer noch ausreichend hoch ist. Insbesondere ein Volumenstrom von 6,5 m³/s bei einer Verdunstereinheits-Temperatur von 40° oder ein Volumenstrom von 1,9 m³/s bei 55° in der Verdunstereinheit 2 lassen eine vorteilhaft ausreichend große Kühlleistung für die Kühlung des Fluidstroms der Elektrolyse von insbesondere 400 kW erzielen.

Die mit Wasser angereicherte feuchte Luft FLW wird anschließend in eine Wassergewinnungseinheit 3 geführt. Die Wassergewinnungseinheit 3 ist in diesem ersten Beispiel insbesondere ein Kondenser, oder in anderen Worten ein Kondensator. Als Kondenser oder Kondensator wird hier eine verfahrenstechnische Vorrichtung verstanden, welche das Kondensieren eines Mediums ermöglicht.

Das Strömen der feuchten Luft mit Wasser FLW wird durch ein Gebläse 11 unterstützt. Das Gebläse 11 kann vorteilhaft den Volumenstrom derart erhöhen, dass die Kühlleistung der Verdunstereinheit 2 für das Kühlen des Fluidstroms der Elektrolyse ausreichend hoch ist. Zusätzlich, besonders vorteilhaft, kann das Gebläse 11 die Druckverhältnisse in der Verdunstereinheit 2 und der Wassergewinnungseinheit 3 derart beeinflussen, dass in der Verdunstereinheit 2 ein Unterdruck im Vergleich zur Wassergewinnungseinheit 3 vorliegt. Mittels der zweiten Drossel 14 kann ein Erhöhen des Drucks in dem Kondenser 3 in Kombination mit dem Betreiben des Gebläses 11 regelbar erfolgen. Dies ist besonders vorteilhaft, da sowohl in der Verdunstereinheit 2 eine größere Menge Wasser aus dem Rohwasser in die feuchte Luft FL verdunstet als auch in der Wassergewinnungseinheit 3 ein größerer Anteil an Wasser kondensieren kann.

In den Kondenser 3 wird von oben Wasser W geführt, welches über Einbauten, insbesondere über Füllkörper, verrieselt wird. Die feuchte Luft mit dem Wasser FLW wird im Gegenstrom zum Wasser W vom Fuße des Kondensers 3 nach oben geführt. Die Einbauten ermöglichen wiederum eine große Austauschfläche. Das Wasser, welches in den Kondenser 3 geführt wird, ist aber, im Unterschied zur Verdunstereinheit 2, vorher abgekühlt worden. Das Wasser W wird also als kaltes Wasser in den Kondenser 3 geführt. Dies führt dazu, dass das Wasser, welches in dem feuchten Luftstrom FLW in den Kondenser 3 geführt wird, auskondensiert. Wird das Gebläse 11 derart betrieben, dass in der Verdunstereinheit 2 ein Unterdruck und in der Wassergewinnungseinheit 3 ein Überdruck herrscht, wird zusätzlich das Kondensieren bei relativ hohen Temperaturen ermöglicht, insbesondere den Temperaturen, die in der Verdunstereinheit 2 herrschen, insbesondere 40°C bis 55°C.

Bei einer Temperatur des Wassers von 50 °C sollte der Druck in dem Kondenser daher bei wenigstens 2 bar liegen. Ist es dennoch nötig, die Temperatur des Kondensers zu erniedrigen, kann das Wasser mit einer Kühleinrichtung 13 auf eine vorbestimmte Temperatur gekühlt werden. Ein Erhöhen des Drucks im Kondenser 3 ist nur dann zweckmäßig, wenn die Umgebungstemperaturen des Kondensators 3 wie in tropischen und subtropischen Regionen erhöht ist. Ist die Umgebungstemperatur niedrig, das bedeutet insbesondere unterhalb von 30°C, so ist ein Erhöhen des Drucks in dem Kondenser 3 nicht zweckmäßig.

Figur 2 zeigt eine Elektrolyse-Kühlvorrichtung 1 mit einer Verdunstereinheit 2 und, im Unterschied zum ersten Ausführungsbeispiel, mit einer Kühlbox 20. Grundsätzlich wird im zweiten Ausführungsbeispiel, wie auch im ersten Ausführungsbeispiel, ein Fluidstrom 9 einer Elektrolyseeinheit 100 in einen Wärmetauscher 7 abgekühlt. Das Kühlen des Fluidstroms 9 erfolgt mittels eines abgekühlten Rohwasserstroms RWK aus der Verdunstereinheit 2. In die Verdunstereinheit 2 wird einen Strom feuchter Luft FL im Gegenstrom zum Rohwasser RW geführt. Ein Anteil des reinen Wassers verdunstet aus dem Rohwasser in die feuchte Luft, wobei sich einerseits die Temperatur des Rohwassers abkühlt und andererseits der Wassergehalt der feuchten Luft FL erhöht. Die feuchte Luft mit dem erhöhten Wassergehalt FLW wird anschließend in eine Wassergewinnungseinheit 3 geführt. In diesem zweiten Ausführungsbeispiel ist die Wassergewinnungseinheit 3 in eine Kühlbox eingehaust. Eine Kühlbox ist in anderen Worten also ein umbauter Raum mit einem thermisch isolierten Volumen im Inneren. Die Kühlbox 20 wird durch eine aktive Kühlbox-Kühlvorrichtung 21, insbesondere ein Wärmetauscher oder eine elektrisch betriebene Kühlvorrichtung, auf niedrige Temperaturen temperiert, wobei zweckmäßigerweise das Wasser innerhalb des Kondensators 3 gekühlt wird, da hier ein Flüssig-Flüssig-Wärmetauscher eingesetzt werden kann. Ein zusätzlicher optionaler Gas-GasWärmetauscher 22 kann vorteilhaft sein, um den feuchten Luftstrom, der in die Kühlbox 20 geleitet wird mithilfe des Gasstroms, der die Kühlbox 20 verlässt, vorzukühlen. Dies verringert vorteilhaft den Energiebedarf der Kühlbox-Kühlvorrichtung 21.

Um eine ausreichend große Menge Wasser aus der Umgebungsluft zu gewinnen, sodass der Verdunstungseffekt in der Verdunstereinheit 2 für eine Kühlung ausreicht, und ausreichend Wasser für eine Elektrolyse bereitgestellt werden kann, muss die austretende Luft L weniger Feuchtigkeit, also Wasser, enthalten als die feuchte Luft FL, die in die Verdunstereinheit 2 geführt wird.

In einem Beispiel umfasst die feuchte Luft FL einen Stoffmengenanteil von Wasser von 1 mol % und die austretende Luft L soll als Zielvorgabe einen geringeren Wassergehalt von 0,5 mol % aufweisen. Erhöht man den Druck im Kondenser 3 mittels des Gebläses 11 und der Drossel 14 auf 2 bar, so sind Kondensertemperaturen von etwa 7 °C nötig, um maximal 0,5 % Stoffmengenanteil Wasser in der austretenden Luft L zu erzielen.

In einem dritten Ausführungsbeispiel umfasst die Elektrolyse-Kühlvorrichtung 1 ebenfalls eine Verdunstereinheit 2. Im Unterschied zu dem ersten und zweiten Ausführungsbeispiel umfasst die Elektrolyse-Kühlvorrichtung 1 einen Adsorber 30 zur Wassergewinnung aus der mit Wasser angereicherten feuchten Luft FLW. Der Adsorber 30 umfasst in seinem Inneren ein Adsorbens, welches eine hohe Aufnahmekapazität für Wasser hat. Die Aufnahmekapazität kann mittels Adsorptionsisothermen beschrieben werden. Die Adsorptionsisotherme eines typischen Adsorbens zeigt, dass insbesondere bei niedrigen Temperaturen oder höheren Wasserpartialdrücken Wasser an das Adsorbens adsorbiert wird. Typische Adsorbentien sind Kieselgel, Zeolithe und andere Molsiebe. Während der Adsorption wird das Adsorbens mit Wasser beladen. Spezifische Beladungen eines Adsorbens, beladen auch Adsorbat genannt, können typischerweise in einem Bereich von mehr als 10 g Wasser pro 100 g Adsorbens liegen.

Während des Abtrennens des Wassers aus der mit Wasser beladenen feuchten Luft FLW sind das dritte Drei-Wege-Ventil 31 und das vierte Drei-Wege-Ventil 32 so geschaltet, dass der feuchte Luftstrom mit Wasser FLW durch das Adsorbens geleitet wird und anschließend in die Umgebung als Luft L abgegeben werden kann. Mittels der Drossel 14 und dem Gebläse 11 kann eine Druckerhöhung in der Adsorptionseinheit erfolgen, welche das Adsorbieren unterstützt. Für das Desorbieren des Wassers kann anschließend mittels der Drossel 14 der Druck erniedrigt werden. Es handelt sich also um eine sogenannte Druckwechseladsorption. Alternativ zu einem Druckwechselverfahren mittels der Drossel 14 und dem Gebläse 11 kann auch eine Temperaturwechseladsorption erfolgen. Bei einem Temperaturwechselverfahren erfolgt die Adsorption des Wassers bei niedrigeren Temperaturen als die Desorption des Wassers. Mithilfe eines Heizelements 33 kann die Adsorptionseinheit 30 aufgewärmt werden, um eine Regeneration des Adsorbens zu ermöglichen. Besonders vorteilhaft umfasst das Heizelement 33 eine Mantelheizung.

Bei einer Regeneration des Adsorbers 30, also der Desorption des Wassers aus dem Adsorbat, stehen die Ventilstellung der dritten und vierten Drei- Wege-Ventile 31 und 32 derart, dass ein Luftkreislauf entsteht, welcher durch ein weiteres zweites Gebläse 34 zum Strömen gebracht wird. Der Luftstrom wird dann durch ein Kühlelement 35 geführt, sodass das Wasser auskondensiert. Die Regenerationstemperatur der Luft L liegt über der Temperatur der feuchten Luft mit Wasser FLW aus der Verdunstereinheit. Das bedeutet, diese Luft L kann mit einem höheren Anteil an Wasser angereichert werden als die feuchte Luft mit Wasser FLW. Somit kann das Kühlelement 35 bei weniger tiefen Temperaturen betrieben werden als eine vergleichbare direkte Kühlung der feuchten Luft mit Wasser FLW nach der Verdunstereinheit 2. Das ermöglicht vorteilhaft auch bei sehr hohen Umgebungstemperaturen ein Kühlen mittels Luftkühlung.

Das auskondensierte Wasser wird dann in einer Phasentrennvorrichtung 36 abgetrennt und kann optional wenigstens teilweise in die Verdunstereinheit 2 zurückgeführt und/oder, besonders vorteilhaft, als Edukt für eine Elektrolyse verwendet werden.

Der Einsatz eines Adsorptionsmittels ermöglicht vorteilhaft ein Verfahren mit nahezu keinem Verlust von Adsorbens während des Verfahrens, was Wartungskosten und Wartungszeiten vorteilhaft niedrig hält. Bei hoher Umgebungstemperatur, also wenn die Kühlung sehr energieintensiv ist, ist eine Adsorption einer Absorption vorzuziehen; Besonders auch deshalb, da elektrische Energie zur Regenerierung, die zu einem hohen Temperaturniveau von wenigstens 100 °C führt, zur Verfügung steht.

Für den Fall, dass es erforderlich ist, die Verdunstungskühlung in der Verdunstereinheit 2 gleichzeitig zu einer Desorption in Adsorber 30 durchzuführen, so ist es zweckmäßig das dritte Drei-Wege-Ventil 31 durch ein 4-Portventil zu ersetzen, um das Gebläse 11 betreiben zu können. Dies ist insbesondere dann vorteilhaft, wenn ein Heizen des Heizelements 33 mittels elektrischer Energie erfolgt, welche insbesondere mittags aus erneuerbaren Energien in großer Menge zur Verfügung steht. Dieser Fall tritt insbesondere ein, wenn die elektrische Energie aus einer Fotovoltaikanlage stammt, die so ausgelegt ist, dass zu Zeiten maximaler Sonneneinstrahlung mehr elektrische Leistung zur Verfügung steht, als von der Elektrolyseanlage benötigt wird.

Anstelle des festen Trocknungsmittels, also des Adsorbens, können auch flüssige Trocknungsmittel, also ein Absorbens, verwendet werden. Typische Absorbentien stellen wässrige Lösungen von Lithium-Halogeniden, insbesondere von LiCl oder LiBr dar. Es können aber auch Lösungen anderer anorganischer Salze, insbesondere von Kalium- oder Calciumhalogeniden oder anorganische Salze wie Kaliumacetat, Kaliumformiat oder Kaliumlaktat oder auch ionische Flüssigkeiten als Absorbens eingesetzt werden. Auch jede andere Flüssigkeit, welche den Dampfdruck von Wasser herabsetzt, ist als Absorbens denkbar, wie insbesondere Glycole, welche bereits häufig für die Wasserabtrennung aus Gasströmen eingesetzt werden. Die Beladung und Regeneration des Absorbens findet vorteilhafterweise in Packungen statt, wobei das beladene Absorbat und das zu beladene Absorbens über die Packung strömen oder in anderen Worten verrieselt werden. Im Gegenstrom zum flüssigen Absorbens bzw. Absorbat wird die mit Wasser beladene feuchte Luft FLW (Beladung) oder trockene Luft (Desorption) geführt. Typischerweise werden die Packungen in Kolonnen angeordnet. Die Desorptionskolonne wird dann vorteilhaft beheizt. Es ist auch möglich den zu regenerierenden Strom oder die trockene Luft zu beheizen, um das Desorbieren vorteilhaft effizient zu gestalten. Der Einsatz eines Absorbens ermöglicht ein Verfahren mit einem niedrigeren Druckverlust, mit einer hohen volumenspezifischen Kapazität und damit einem kompakten Bauraum, eine geringere Anfälligkeit gegenüber Verunreinigungen und eine problemlose Lagerung des Trocknungsmittels.

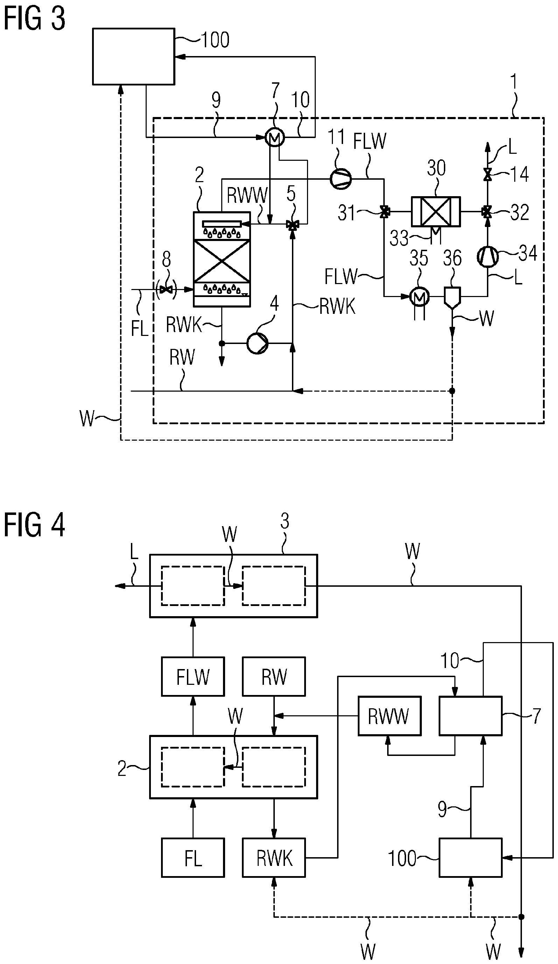

Figur 4 zeigt eine schematische Übersicht des Verfahrens zur Kühlung eines Fluidstroms der Elektrolysevorrichtung 100 mittels eines Wärmetauschers 7, welcher von kühlem Rohwasser RWK, welches aus einer Verdunstereinheit 2 strömt, gekühlt wird. Den Wärmetauscher 7 verlässt der abgekühlte Fluidstrom 10 der Elektrolyseeinheit 100. Das Rohwasser, welches in dem Wärmetauscher 7 vorgewärmt wurde, wird als warmes Rohwasser RWW in die Verdunstereinheit 2 geführt. In die Verdunstereinheit 2 wird ebenso frisches Rohwasser RW geführt. Im Gegenstrom zum Rohwasser RW wird feuchte Luft FL in die Verdunstereinheit 2 geführt. In der Verdunstereinheit 2 geht Wasser W von dem Rohwasser RW auf die feuchte Luft FL über. Die Verdunstereinheit 2 verlässt somit mit Wasser angereicherte feuchte Luft FLW. Diese mit Wasser angereicherte feuchte Luft FLW wird in eine Wassergewinnungseinheit 3 geführt. In der Wassergewinnungseinheit 3 wird Wasser W aus der feuchten Luft FLW abgetrennt. Die Wassergewinnungseinheit verlässt also Luft L und Wasser W. Das Wasser W kann optional entweder zurück in die Elektrolyse als Edukt oder zurück in die Verdunstereinheit 2 als Rohwasser RW geführt werden.

## Patentansprüche

1. Verfahren zum Kühlen eines Fluidstroms (9) einer Elektrolyseeinheit (100) und zur Wassergewinnung aus der Umgebungsluft mit folgenden Schritten:
- Führen von feuchter Luft (FL) mit einer ersten Molmenge Wasser in eine Verdunstereinheit (2),
- Führen von Rohwasser (RW) in die Verdunstereinheit (2) im Gegenstrom zur feuchten Luft (FL), wobei in der Verdunstereinheit (2) eine Temperatur von maximal der Siedetemperatur des Wassers herrscht,
- Verdunsten von reinem Wasser (W) aus dem Rohwasser (RW) in die feuchte Luft (FL), wobei sich das Rohwasser (RW) abkühlt,
- Führen des abgekühlten Rohwassers (RWK) in einen Wärmetauscher (7) und Führen des Fluidstroms (9) der Elektrolyseeinheit (100) in den Wärmetauscher (7), wobei Wärme von dem Fluidstrom (9) auf das Rohwasser (RWW) übertragen wird,
- Führen der feuchten Luft mit dem reinen Wasser (FLW) in eine Wassergewinnungseinheit (3) und Abtrennen einer zweiten Molmenge des reinen Wassers aus der feuchten Luft mit Wasser (FLW) in der Wassergewinnungseinheit (3), wobei eine nach Abtrennung der zweiten Molmenge in der Luft verbleibende dritte Molmenge Wasser kleiner als die erste Molmenge Wasser ist,
- Zurückführen des vorgewärmten Rohwassers (RWW) in die Verdunstereinheit (2),
- Zurückführen des abgekühlten Fluidstroms (10) in die Elektrolyseeinheit (100).

2. Verfahren nach Anspruch 1, wobei das Rohwasser (RW) aus der feuchten Luft (FL) gewonnen wird.

3. Verfahren nach einem der vorhergehenden Ansprüche, wobei die Temperatur in der Verdunstereinheit (3) in einem Bereich von wenigstens 40°C bis maximal 55°C liegt.

4. Verfahren nach einem der vorhergehenden Ansprüche, wobei als Wassergewinnungseinheit (3) ein Kondensator, eine Absorptionseinheit oder eine Adsorptionseinheit (30) verwendet wird.

5. Verfahren nach Anspruch 4 wobei als Adsorptionsmittel Kieselgel, ein Molsieb oder ein Zeolith verwendet wird.

6. Verfahren nach Anspruch 4 oder 5, wobei die Regeneration des Ad- oder Absorptionsmittels druck- und/oder temperaturgetrieben durchgeführt wird.

7. Verfahren nach Anspruch 4, wobei der Kondensator (3) mittels eines Wärmemediums betrieben wird, welches mittels Umgebungsluft gekühlt wird.

8. Verfahren nach einem der vorhergehenden Ansprüche, wobei die zweite Molmenge reinen Wassers (W) wenigstens teilweise als Edukt in den Elektrolyseur (100) geführt wird.

9. Verfahren nach einem der vorhergehenden Ansprüche, wobei die Verdunstereinheit (2) bei einem niedrigeren Druck als die Wassergewinnungseinheit (3) betrieben wird.

10. Vorrichtung (1) zum Kühlen eines Fluidstroms (9) einer Elektrolyseeinheit (100) und zur Wassergewinnung aus der Umgebungsluft zum Durchführen eines Verfahrens gemäß einem der Ansprüche 1 bis 9 umfassend eine Verdunstereinheit (2) geeignet zum Verdunsten von reinem Wasser aus Rohwasser (RW) in einen feuchten Luftstrom (FL) und einen Elektrolyseur (100), wobei ein Fluidstrom (9) des Elektrolyseurs (100) mittels des Rohwassers (RW) kühlbar ist.

11. Vorrichtung nach Anspruch 10, mit einem ersten Wärmetauscher (7) geeignet zum Erwärmen des Rohwassers (RWK) mittels der Abwärme eines Elektrolyseurs (100) vor dem Führen in die Verdunstereinheit (2).

12. Vorrichtung nach einem der Ansprüche 10 oder 11, wobei der erste Wärmetauscher (7) ein Flüssig-Flüssig-Wärmetauscher ist.

13. Vorrichtung nach einem der Ansprüche 8 bis 10, wobei die Verdunstereinheit (2) eine Packung oder Füllkörper umfasst.
